# EUROPEAN PATENT APPLICATION

(11) **EP 4 184 437 A1**
(43) Date of publication of application: **24.05.2023**
(21) Application number: 22208906.2
(22) Date of filing: 22.11.2022
(51) Int. Cl.: G06T 7/207, G06T 7/246

(54) **METHOD AND SYSTEM FOR ESTIMATING MOTION OF REAL-TIME IMAGE TARGET BETWEEN SUCCESSIVE FRAMES**

(30) Priority: 23.11.2021 KR 20210162198; 28.12.2021 KR 20210189152
(71) Applicant: Virnect Inc., Seoul 04379 (KR)
(72) Inventor: KIM, Ki Young, 04379 Seoul (KR); KIM, Yeon Jo, 06949 Seoul (KR)
(74) Representative: BCKIP Part mbB

(57) **Abstract**

A method of estimating a motion of a real-time image target between successive frames according to an embodiment of the present invention is a method of estimating a motion of a real-time image target between successive frames by a motion estimation application executed by at least one processor of a terminal, including detecting a target object in a first frame image, generating a first frame-down image by downscaling the first frame image, setting a plurality of tracking points TP for the target object in the first frame-down image, obtaining a second frame image consecutive to the first frame image after a predetermined time, generating a second frame-down image by downscaling the second frame image, and tracking the target object in the second frame-down image based on the plurality of tracking points TP.

## Description

### CROSS-REFERENCE TO RELATED APPLICATIONS

This Application claims the benefit of Korean Patent Provisional Application No. 10-2021-0162198 filed on November 23, 2022 and Korean Patent Application No. 10-2021-0189152, filed on December 28, 2021 in the Korean Intellectual Property Office.

### TECHNICAL FIELD

The present invention relates to a method and system for estimating a motion of a real-time image target between successive frames. More particularly, the present invention relates to a method and system for estimating a motion of an image target within successive frames by assuming homography between downscaled successive frames.

### BACKGROUND

With the development of information and communication technology (ICT), technologies for identifying an object included in an image including a plurality of frames are being developed.

In particular, technologies for allowing electronic devices to identify an object in an image or identify a predetermined object by itself by applying a human recognition method to the electronic devices have been developed.

Recently, technologies for tracking an object in an image and processing an image of the tracked object into various forms (e.g., augmented reality content and/or simultaneous localization and mapping (SLAM) based data, and the like) have been actively studied, and devices and software that provide content with respect to processed images in real time have been released.

However, general technologies for tracking or processing an object within an image have a limitation in accurately ascertaining the location of an object in real time, and there is a problem that considerable device resources are consumed in tracking the location of an object or editing an image.

Furthermore, conventional technologies have a problem of deterioration of performance for object motion estimation due to various noises (e.g., motion blur, glare and/or a rolling shutter effect) or change in the scale and/or viewpoint of a corresponding object which may occur during image shifting including a predetermined motion, such as an excessively rapidly moving target object within a corresponding image.

### SUMMARY

The present invention has been devised to solve the problems as described above, and an object of the present invention is to provide a method and system for estimating a motion of an image target in successive frames by assuming homography between downscaled successive frames.

However, the technical tasks to be achieved by the present invention and embodiments of the present invention are not limited to the technical tasks described above, and other technical tasks may be present.

A method of estimating a motion of a real-time image target between successive frames according to an embodiment of the present disclosure is a method of estimating a motion of a real-time image target between successive frames by a motion estimation application executed by at least one processor of a terminal, including detecting a target object in a first frame image, generating a first frame-down image by downscaling the first frame image, setting a plurality of tracking points for the target object in the first frame-down image, obtaining a second frame image consecutive to the first frame image after a predetermined time, generating a second frame-down image by downscaling the second frame image, and tracking the target object in the second frame-down image based on the plurality of tracking points.

Here, the tracking the target object in the second frame-down image based on the plurality of tracking points may include generating a tracking point set based on the plurality of tracking points, determining, as a tracking point main group, a point group having a highest matching score for the second frame-down image among a plurality of point groups included in the tracking point set, and tracking the target object in successive frame images including the first frame image and the second frame image based on the tracking point main group.

Furthermore, the setting the plurality of tracking points may include detecting edges of the target object in the first frame-down image, and setting the plurality of tracking points based on points positioned on the detected edges.

Furthermore, the setting the plurality of tracking points based on points positioned on the edges may include setting the plurality of tracking points at preset intervals based on a preset position on the edges.

Furthermore, the generating a tracking point set based on the plurality of tracking points may include converting a tracking point group including the plurality of tracking points based on preset translation parameters, generating a tracking conversion point group corresponding to each of the preset translation parameters through the conversion, and generating the tracking point set including the generated at least one tracking conversion point group and the tracking point group.

Furthermore, the tracking point main group may be a point group having a highest matching score for the second frame-down image among a plurality of point groups in the tracking point set.

Furthermore, the matching score may be a parameter value indicating a matching rate between any one of the plurality of point groups included in the tracking point set and a target edge corresponding to an edge in the second frame-down image.

Furthermore, the determining as the tracking point main group may include detecting the target edge in the second frame-down image, projecting each of the plurality of point groups included in the tracking point set onto a target edge area including the detected target edge, detecting matching points positioned on the target edge among a plurality of points included in each of the projected point groups, and calculating the matching score for each point group based on the detected matching points.

Furthermore, the determining as the tracking point main group may include determining a point group having a highest matching score among a plurality of matching scores calculated for the point groups as the tracking point main group.

Furthermore, the tracking the target object in the successive frame images may include performing a dense image alignment operation on the successive frame images based on a translation parameter corresponding to the tracking point main group, estimating a homography for the successive frame images based on the performed operation, and tracking the target object based on the estimated homography.

The method and system for estimating a motion of a real-time image target between successive frames according to an embodiment of the present invention can track a motion of an image target using downscaled successive frame images.

In this case, a downscaled image is insensitive to position movement with respect to a desired characteristic or pattern within the image and the presence or absence of a desired characteristic or pattern can be easily detected.

Thus, it is possible to accurately and easily detect and/or track the image target while canceling noise (e.g., motion blur, glare and/or a rolling shutter effect) due to motion of the image target within successive frame images (i.e., image shifting) or change in the scale and/or viewpoint with respect to the image target.

In addition, the method and system for estimating a motion of a real-time image target between successive frames according to an embodiment of the present invention can estimate a motion of the image target by assuming a homography between corresponding successive frame images based on downscaled successive frame images. Thus, it is possible to reduce the amount of data processing necessary for homography calculation to increase a calculation speed and/or efficiency, thereby improving the performance of an estimation algorithm for a motion of the image target.

In addition, the method and system for estimating a motion of a real-time image target between successive frames according to an embodiment of the present invention can support various object detection and/or tracking services based on the estimation algorithm as described above, and thus can enhance the quality and effectiveness of the various object detection and/or tracking services (e.g., augmented reality based simultaneous localization and mapping (SLAM) service, and the like).

However, the effects that can be obtained in the present invention are not limited to the above-mentioned effects, and other effects that are not mentioned can be clearly understood from the description below.

### BRIEF DESCRIPTION OF THE DRAWINGS

FIG. 1 is a conceptual diagram of a system for estimating a motion of a real-time image target between successive frames according to an embodiment of the present invention.
FIG. 2 is an internal block diagram of a terminal according to an embodiment of the present invention.
FIG. 3 and FIG. 4 are flowcharts illustrating a method of estimating a motion of a real-time image target between successive frames according to an embodiment of the present invention.
FIG. 5 and FIG. 6 are exemplary diagrams for describing a method of setting tracking points for a target object in a first frame image according to an embodiment of the present invention.
FIG. 7 is an exemplary diagram for describing a method of determining a tracking point main group according to an embodiment of the present invention.

### DETAILED DESCRIPTION

The present invention can be modified in various manners and can have various embodiments and thus specific embodiments will be illustrated in the drawings and described in detail in the detailed description. Effects and features of the present invention and a method for achieving the same will become apparent with reference to the embodiments described below in detail in conjunction with the drawings. However, the present invention is not limited to the embodiments described below and may be implemented in various forms. In the following embodiments, terms such as "first" and "second" are used for the purpose of distinguishing one component from another, not in a limiting sense. Further, the singular expression includes the plural expression unless the context clearly dictates otherwise. In addition, terms such as "include" and "have" means that features or components described in the specification are present and do not preclude the possibility that one or more other features or components will be added. In addition, in the drawings, the size of a component may be exaggerated or reduced for convenience of description. For example, since the size and thickness of each component shown in the drawings are arbitrarily indicated for convenience of description, the present invention is not necessarily limited to the illustration.

Hereinafter, embodiments of the present invention will be described in detail with reference to the accompanying drawings, and the same or corresponding components are given the same reference numerals, and redundant description thereof will be omitted.

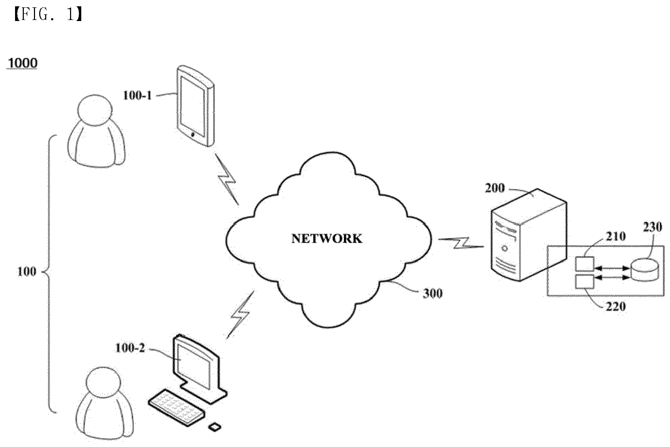

FIG. 1 is a conceptual diagram of a system for estimating a motion of a real-time image target between successive frames according to an embodiment of the present invention.

Referring to FIG. 1, the system 1000 for estimating a motion of a real-time image target between successive frames (hereinafter, a real-time image target motion estimation system) according to an embodiment of the present invention may provide a service for estimating a motion of a real-time image target in successive frames estimation service (hereinafter, target motion estimation service) by assuming homography between downscaled successive frames.

In an embodiment, the real-time image target motion estimation system 1000 that provides the aforementioned target motion estimation service may include a terminal 100, a database server 200, and a network 300.

In this case, the terminal 100 and the database server 200 may be connected through the network 300.

Here, the network 300 according to the embodiment means a connection structure in which information can be exchanged between nodes such as the terminal 100 and/or the database server 200, and examples of the network 300 include a 3rd Generation Partnership Project (3GPP) network, a Long Term Evolution (LTE) network, a World Interoperability for Microwave Access (WIMAX) network, the Internet, a Local Area Network (LAN), a Wireless Local Area Network (Wireless LAN), Wide Area Network (WAN), Personal Area Network (PAN), Bluetooth network, a satellite broadcasting network, an analog broadcasting network, a digital multimedia broadcasting (DMB) network, and the like are included, but are not limited thereto.

Hereinafter, the terminal 100 and the database server 200 implementing the real-time image target motion estimation system 1000 will be described in detail with reference to the accompanying drawings.

### - Terminal 100

The terminal 100 according to an embodiment of the present invention may be a predetermined computing device in which a motion estimation application (hereinafter, an application) that provides the target motion estimation service is installed.

Specifically, the terminal 100 may include a mobile type computing device 100-1 and/or a desktop type computing device 100-2 in which applications are installed in terms of hardware.

Here, the mobile type computing device 100-1 may be a mobile device such as a smartphone or a tablet PC in which applications are installed.

For example, the mobile type computing device 100-1 may include a smartphone, a mobile phone, a digital broadcasting device, personal digital assistants (PDA), a portable multimedia player (PMP), a tablet PC, and the like.

In addition, the desktop type computing device 100-2 may include devices in which a program for executing the target motion estimation service based on wired/wireless communication is installed, such as personal computers including a fixed desktop PC, a laptop computer, and an ultrabook.

Further, according to an embodiment, the terminal 100 may further include a predetermined server computing device that provides a target motion estimation service environment.

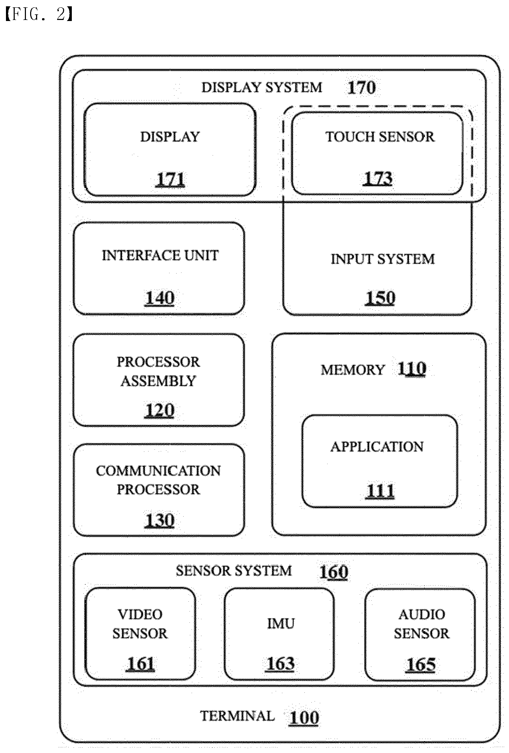

FIG. 2 is an internal block diagram of the terminal 100 according to an embodiment of the present invention.

Referring to FIG. 2, the terminal 100 may include a memory 110, a processor assembly 120, a communication processor 130, an interface 140, an input system 150, a sensor system 160, and a display system 170 in terms of functions. These components may be configured to be included in the housing of the terminal 100.

Specifically, the memory 110 stores an application 111, and the application 111 may store any one or more of various application programs, data, and commands for providing a target motion estimation service environment.

That is, the memory 110 may store commands and data that may be used to create the target motion estimation service environment.

Further, the memory 110 may include a program region and a data region.

Here, the program region according to the embodiment may be linked between an operating system (OS) for booting the terminal 100 and functional elements, and the data region may store data generated when the terminal 100 is used.

In addition, the memory 110 may include at least one or more non-transitory computer-readable storage media and temporary computer-readable storage media.

For example, the memory 110 may be various storage devices such as a ROM, an EPROM, a flash drive, and hard drive, and may include a web storage that executes the storage function of the memory 110 on the Internet.

The processor assembly 120 may include at least one processor capable of executing instructions of the application 111 stored in the memory 110 to perform various operations for generating the target motion estimation service environment.

In an embodiment, the processor assembly 120 may control overall operations of the components through the application 111 of the memory 110 to provide the target motion estimation service.

The processor assembly 120 may be a system on chip (SOC) suitable for the terminal 100 including a central processing unit (CPU) and/or a graphics processing unit (GPU), and may execute an operating system (OS) and/or application programs stored in the memory 110 and control the components mounted in the terminal 100.

In addition, the processor assembly 120 may internally communicate with each component through a system bus, and may include one or more predetermined bus structures including a local bus.

In addition, the processor assembly 120 may include at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

The communication processor 130 may include one or more devices for communicating with external devices. This communication processor 130 may perform communication through a wireless network.

Specifically, the communication processor 130 may communicate with the terminal 100 storing a content source for implementing the target motion estimation service environment, and may communicate with various user input components such as a controller that receives a user input.

In an embodiment, the communication processor 130 may transmit/receive various types of data related to the target motion estimation service to/from other terminals 100 and/or external servers.

This communication processor 130 may wirelessly transmit/receive data to/from at least one of a base station, an external terminal 100, and an arbitrary server on a mobile communication network constructed through communication devices capable of performing technical standards or communication schemes for mobile communication (e.g., Long Term Evolution (LTE), Long Term Evolution-Advanced (LTE-A), 5G New Radio (NR), and Wi-Fi) or short-distance communication.

The sensor system 160 may include various sensors such as an image sensor 161, a position sensor (IMU) 163, an audio sensor 165, a distance sensor, a proximity sensor, and a contact sensor.

Here, the image sensor 161 may capture an image and/or video of a physical space around the terminal 100.

In an embodiment, the image sensor 161 may capture and obtain images (e.g., a first frame image and/or a second frame image) related to the target motion estimation service.

In addition, the image sensor 161 may be disposed on the front or/or rear side of the terminal 100 to acquire an image in the direction in which it is disposed, and may capture an image of a physical image through a camera disposed toward the outside of the terminal 100.

The image sensor 161 may include an image sensor device and an image processing module. Specifically, the image sensor 161 may process still images or moving images obtained by an image sensor device (e.g., CMOS or CCD).

In addition, the image sensor 161 may extract necessary information by processing a still image or a moving image acquired through the image sensor device using the image processing module and transmit the extracted information to a processor.

The image sensor 161 may be a camera assembly including one or more cameras. The camera assembly may include a general camera that captures a visible light band, and may further include a special camera such as an infrared camera or a stereo camera.

In addition, the image sensor 161 as described above may be included in the terminal 100, or may be included in an external device (e.g., an external server or the like) and operate through interoperation based on the above-described communication processor 130 and/or the interface 140 according to an embodiment.

The position sensor (IMU) 163 may detect at least one of a movement and an acceleration of the terminal 100. For example, it may be composed of a combination of various position sensors such as an accelerometer, a gyroscope, and a magnetometer.

In addition, the location sensor (IMU) 163 may recognize spatial information about a physical space around the terminal 100 in association with the communication processor 130, such as a GPS of the communication processor 130.

The audio sensor 165 may recognize sounds around the terminal 100.

Specifically, the audio sensor 165 may include a microphone capable of detecting user's audio input using the terminal 100.

In an embodiment, the audio sensor 165 may receive audio data necessary for the target motion estimation service from a user.

The interface 140 may connect the terminal 100 with one or more other devices such that the terminal 100 can communicate therewith. Specifically, the interface 140 may include a wired and/or wireless communication device compatible with one or more different communication protocols.

Through this interface 140, the terminal 100 may be connected to various input/output devices.

For example, the interface 140 may output audio by being connected to an audio output device such as a headset port or a speaker.

Although an audio output device is connected through the interface 140 in the above-described example, an embodiment in which it is installed in the terminal 100 may also be provided.

Further, the interface 140 may obtain user input by being connected to an input device such as a keyboard and/or a mouse, for example.

Although a keyboard and/or a mouse may be connected through the interface 140, an embodiment in which they are installed in the terminal 100 may also be provided.

The interface 140 may include at least one of a wired/wireless headset port, an external charger port, a wired/wireless data port, a memory card port, a port connecting a device including an identification module, an audio input/output (I/O) port, a video I/O port, an earphone port, a power amplifier, an RF circuit, a transceiver, and other communication circuits.

The input system 150 may detect user input (e.g., a gesture, voice command, operation of a button, or other types of input) related to the target motion estimation service.

Specifically, the input system 150 may include a predetermined button, a touch sensor, and/or an image sensor 161 that receives user motion input.

Further, the input system 150 may be connected to an external controller through the interface 140 to receive user input.

The display system 170 may output various types of information related to the target motion estimation service as graphic images.

As an embodiment, the display system 170 may display an image including a predetermined target object, a first frame image, a second frame image, and/or various user interfaces.

The display system 170 may include a liquid crystal display (LCD), a thin film transistor-liquid crystal display (TFT-LCD), organic light-emitting diodes (OLEDs), a flexible display, a 3D display, and an e-ink display.

The aforementioned components may be disposed in the housing of the terminal 100, and a user interface may include a touch sensor 173 on a display 171 configured to receive user touch input.

Specifically, the display system 170 may include the display 171 that outputs images and the touch sensor 173 that detects user touch input.

For example, the display 171 may be implemented as a touchscreen by forming a layer structure along with the touch sensor 173 or being integrated with the touch sensor 173. Such a touchscreen may serve as a user input unit that provides an input interface between the terminal 100 and the user and may provide an output interface between the terminal 100 and the user.

Meanwhile, the terminal 100 according to an embodiment of the present invention may perform various functional operations necessary for the target motion estimation service using at least one disclosed algorithm.

As an embodiment, the terminal 100 may perform various functional operations necessary for the target motion estimation service based on various algorithms for performing object detection, image segmentation, image down scaling, feature point detection, and/or homography estimation.

According to an embodiment, the terminal 100 may further perform at least some functional operations performed by the database server 200 which will be described later.

### - Database server 200

The database server 200 according to an embodiment of the present invention may perform a series of processes for providing the target motion estimation service.

Specifically, in the embodiment, the database server 200 may provide the target motion estimation service by exchanging, with an external device such as the terminal 100, data necessary to allow a process of estimating a motion of a real-time image target between successive frames to be performed in the external device.

More specifically, in the embodiment, the database server 200 may provide an environment in which the application 111 can operate in an external device (the mobile type computing device 100-1 and/or desktop type computing device 100-2 in the embodiment).

To this end, the database server 200 may include applications, data, and/or commands required for the application 111 to operate and may transmit/receive data based thereon to/from the external device.

Further, in the embodiment, the database server 200 may detect a target object within a predetermined first frame image.

Specifically, the database server 200 may obtain the first frame image from a predetermined basic image based on a plurality of successive frames.

Further, the database server 200 may detect the target object in the first frame image by performing predetermined image processing based on the first frame image.

In the embodiment, the database server 200 may downscale the first frame image in which the target object is detected.

In the embodiment, the database server 200 may set tracking points for the target object in the downscaled first frame image.

Here, the tracking points according to the embodiment may be keypoints indicating feature points of the target object for detecting and/or tracking the target object.

In addition, in the embodiment, the database server 200 may obtain, as a second frame image, a predetermined frame image consecutive to the first frame image from the basic image.

Further, in the embodiment, the database server 200 may downscale the obtained second frame image.

In the embodiment, the database server 200 may determine a tracking point main group based on the downscaled second frame image and the set tracking points.

Here, the tracking point main group according to the embodiment may mean a group of tracking points having the highest matching score for the downscaled second frame image among the set tracking points.

Further, in the embodiment, the database server 200 may perform target object tracking based on the determined tracking point main group.

That is, the database server 200 may realize a target object tracking service capable of detecting and/or tracking a predetermined target object based on the tracking point main group.

Further, in the embodiment, the database server 200 may perform a predetermined functional operation required for the target motion estimation service using at least one disclosed algorithm.

In an embodiment, the database server 200 may perform various functional operations necessary for the target motion estimation service based on various algorithms for performing object detection, image segmentation, image downscaling, feature point detection, and/or homography estimation.

More specifically, in the embodiment, the database server 200 may read a predetermined algorithm driving program provided to perform the aforementioned functional operations from a memory module 230 and perform a corresponding functional operation according to the read predetermined algorithm driving program.

In this case, the predetermined algorithm as described above may be directly included in the database server 200 or implemented in a device and/or a server separate from the database server 200 and perform functional operations for the target motion estimation service according to an embodiment.

Although the predetermined algorithm is included in the database server 200 and implemented in the following description, the present invention is not limited thereto.

Further, in the embodiment, the database server 200 may store and manage various application programs, instructions, and/or data for implementing the target motion estimation service.

As an embodiment, the database server 200 may store and manage at least one basic image, a first frame image, a second frame image, tracking points, and/or various algorithms required for the target motion estimation service.

Referring to FIG. 1, the database server 200 as described above may be implemented as a predetermined computing device including at least one processor module 210 for data processing, at least one communication module 220 for data exchange with external devices, and at least one memory module 230 storing various application programs, data and/or instructions for providing the target motion estimation service in the embodiment.

Here, the memory module 230 may store one or more of an operating system (OS), various application programs, data, and instructions for providing the target motion estimation service.

Further, the memory module 230 may include a program region and a data region.

Here, the program region according to the embodiment may be linked between an operating system (OS) and functional elements for booting the server, and the data region may store data generated when the server is used.

In an embodiment, the memory module 230 may be various storage devices such as a ROM, a RAM, an EPROM, a flash drive, and a hard drive and may be a web storage that performs the storage function of the memory module 230 on the Internet.

Further, the memory module 230 may be a recording medium attachable/detachable to/from the server.

Meanwhile, the processor module 210 may control the overall operation of each unit described above in order to implement the target motion estimation service.

The processor module 210 may be a system-on-chip (SOC) suitable for a server including a central processing unit (CPU) and/or a graphic processing unit (GPU), may execute the operating system (OS) and/or application programs stored in the memory module 230, and may control each component mounted in the server.

In addition, the processor module 210 may internally communicate with each component through a system bus and may include one or more predetermined bus structures including a local bus.

In addition, the processor module 210 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

Although the database server 200 according to an embodiment of the present invention performs the aforementioned functional operation in the above description, various embodiments in which at least some functional operations performed by the database server 200 are performed by an external device (e.g., the terminal 100), or at least some functional operations performed by the external device may be further performed in the database server 200 may be provided.

### - Method of estimating motion of real-time image target between successive frames

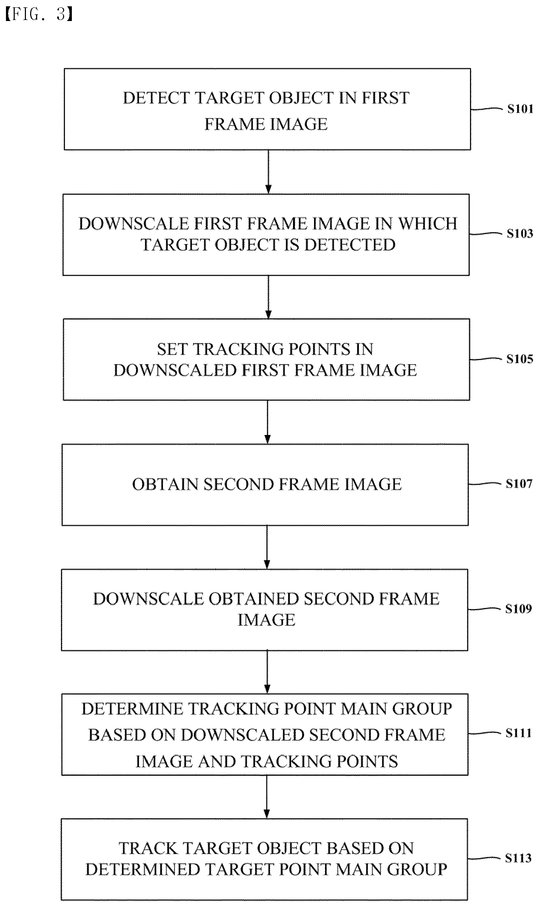

Hereinafter, a method of estimating a motion of a real-time image target between successive frames by the application 111 executed by at least one processor of the terminal 100 according to an embodiment of the present invention will be described in detail with reference to FIGS. 3 to 7.

In an embodiment of the present invention, at least one processor of the terminal 100 may execute at least one application 111 stored in at least one memory 110 or allow the application 111 to operate in a background state.

Hereinafter, execution of a method of providing the target motion estimation service by the at least one processor executing commands of the application 111 will be described as execution of the application 111.

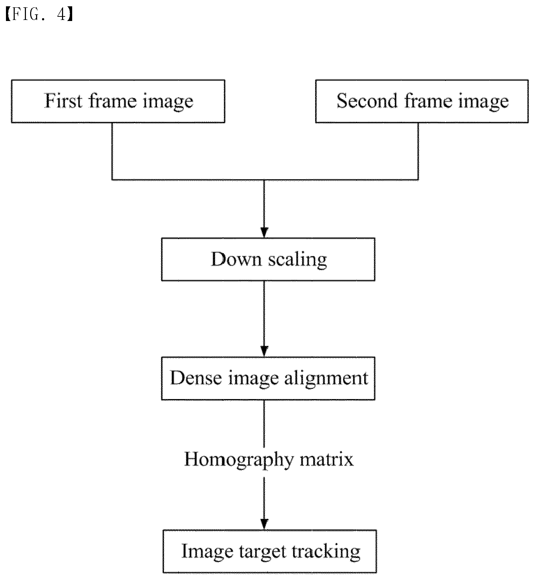

FIG. 3 and FIG. 4 are flowcharts illustrating a method of estimating a motion of a real-time image target between successive frames according to an embodiment of the present invention.

Referring to FIG. 3 and FIG. 4, in an embodiment, the application 111 executed by at least one processor of the terminal 100 or operating in a background state may detect a target object in a first frame image (S101).

Specifically, in an embodiment, the application 111 may obtain a predetermined first frame image from a predetermined basic image including a plurality of successive frames.

In addition, in an embodiment, the application 111 may detect a target object which will be detected within the basic image from the first frame image.

In an embodiment, the application 111 may perform predetermined image processing (e.g., object detection, image segmentation, and/or feature point detection) based on the first frame image to detect the target object in the first frame image. However, the present invention is not limited thereto.

In an embodiment, the application 111 may downscale the first frame image in which the target object is detected (S103).

That is, in an embodiment, the application 111 may perform downscaling to adjust the resolution and aspect ratio of the first frame image by reducing the size of the first frame image in which the target object is detected.

For example, the application 111 may perform downscaling to adjust the resolution of the first frame image from "4K (4096×2160)" to "VGA (640×480)."

Therefore, the application 111 can easily detect and/or track a target object in a plurality of frame images while cancelling noise (e.g., motion blur, glare and/or a rolling shutter effect) due to motion of the target object in the plurality of frame images by using a characteristic that a downscaled image is insensitive to position movement of a desired characteristic or pattern (the target object in the embodiment) (i.e., translation invariance is improved) and a characteristic that the presence or absence of a desired characteristic or pattern (the target object in the embodiment) can be easily detected.

Further, in an embodiment, the application 111 may set tracking points for the target object in the downscaled first frame image (S105).

Here, the tracking points according to the embodiment may be keypoints indicating feature points of the target object for detecting and/or tracking the target object.

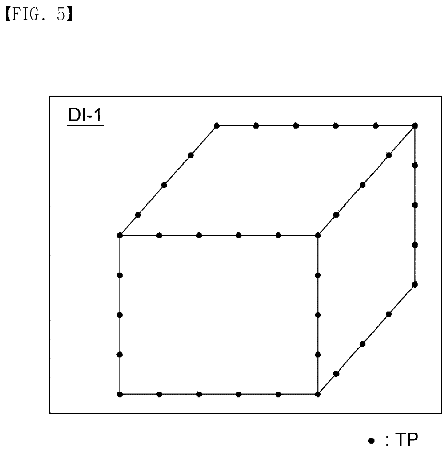

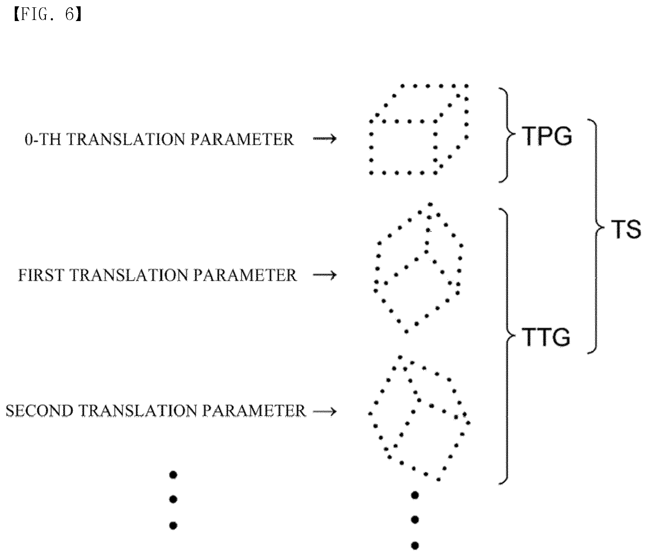

FIG. 5 and FIG. 6 are exemplary diagrams for describing a method of setting tracking points for the target object in the first frame image according to an embodiment of the present invention.

Specifically, referring to FIG. 5, in an embodiment, the application 111 may detect a boundary determining the shape of the target object in the downscaled first frame image DI-1 (hereinafter, a first frame-down image), that is, the edge of the target object.

In an embodiment, the application 111 may perform predetermined image processing (e.g., edge detection) based on the first frame-down image DI-1 to detect the edge of the target object in the first frame-down image DI-1. However, the present invention is not limited thereto.

In an embodiment, the application 111 may set a plurality of tracking points TP on the detected edge.

Specifically, the application 111 may set the plurality of tracking points TP to be positioned on the detected edge at predetermined intervals.

In this case, the application 111 may set the plurality of tracking points TP to be positioned at the predetermined intervals based on a preset position (e.g., a corner) on the edge.

Here, mutual positional relationships of the plurality of tracking points TP set as above may be set based on coordinate information for each tracking point TP.

Further, translation parameters matching the plurality of tracking points TP may be preset.

Referring to FIG. 6, the application 111 may convert the plurality of tracking points TP (i.e., a tracking point group TPG) based on the preset translation parameters to generate a plurality of tracking conversion points (i.e., a tracking conversion point groups TTG) in an embodiment.

Specifically, in an embodiment, the application 111 may generate at least one tracking conversion point group TTG by converting the tracking point group TPG based on at least one preset translation parameter.

As an embodiment, the application 111 may generate a first tracking conversion point group TTG by converting the tracking point group TPG based on a first translation parameter.

In the same manner, the application 111 may generate second to N-th tracking conversion point groups TTG by converting the tracking point group TPG using second to N-th translation parameters.

In an embodiment, the application 111 may generate a tracking point set TS including the generated at least one tracking conversion point group TTG and the tracking point group TPG.

Accordingly, the application 111 can detect and/or track a target object using a larger amount data at the time of detecting and/or tracking the target object within corresponding frames through comparison between the first frame image and a predetermined image consecutive to the first frame image, thereby improve accuracy and reliability.

In an embodiment, the application 111 may obtain a second frame image (S107).

Specifically, in the embodiment, the application 111 may obtain, as the second frame image, a predetermined frame image consecutive to the first frame image of the aforementioned basic image (e.g., a frame image after a predetermined frame from the first frame image).

In an embodiment, the application 111 may downscale the obtained second frame image (S109).

That is, in the embodiment, the application 111 may perform downscaling to adjust the resolution and aspect ratio of the second frame image by reducing the size of the obtained second frame image.

For example, the application 111 may perform downscaling to adjust the resolution of the second frame image from "4K (4096×2160)" to "VGA (640×480)."

In an embodiment, the application 111 may determine a tracking point main group based on the downscaled second frame image and the set tracking points TP (S111).

Here, the tracking point main group according to the embodiment may mean a point group having the highest matching score for the downscaled second frame image among a plurality of point groups included in the aforementioned tracking point set TS (tracking point group TPG and/or at least one tracking conversion point group TTG in the embodiment).

In this case, the matching score according to the embodiment may be a parameter value indicating a matching rate between any one of the plurality of point groups included in the tracking point set TS and an edge present in the downscaled second frame image.

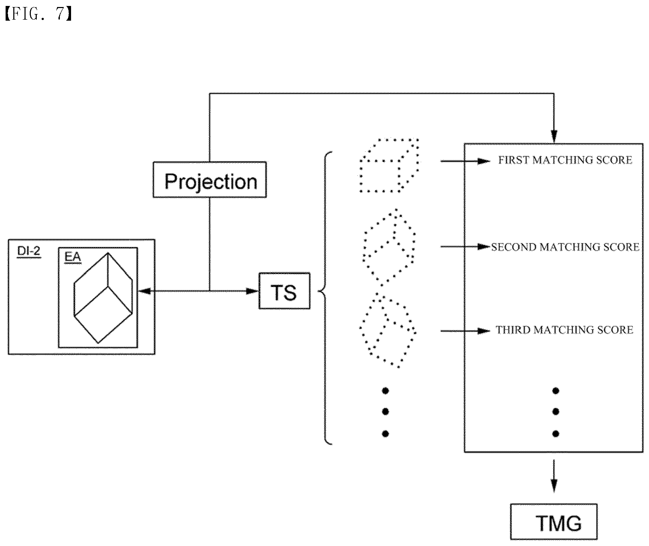

FIG. 7 is an exemplary diagram for describing a method of determining a tracking point main group according to an embodiment of the present invention.

Specifically, referring to FIG. 7, in an embodiment, the application 111 may detect a boundary, that is, edges, present in the downscaled second frame image DI-2 (hereinafter, a second frame-down image).

In an embodiment, the application 111 may perform predetermined image processing (e.g., edge detection) based on the second frame-down image DI-2 to detect an edge in the second frame-down image DI-2. However, the present invention is not limited thereto.

In an embodiment, the application 111 may calculate a matching score between the detected edge in the second frame-down image DI-2 and each point group in the tracking point set TS.

Specifically, in an embodiment, the application 111 may project a plurality of points included in a first point group in the tracking point set TS (hereinafter, a plurality of reference points) on an edge (hereinafter, target edge) area EA in the second frame-down image DI-2.

Here, the target edge area EA according to the embodiment may be a predetermined bounding box area including the target edge.

Here, the plurality of reference points may be in a state in which mutual positional relationships thereof based on coordinate information for each reference point are all set.

In addition, the plurality of reference points may be projected onto the target edge while maintaining the set mutual positional relationships.

In addition, the application 111 may detect reference points (hereinafter, matching points) positioned on the target edge from among the plurality of reference points projected on the target edge area EA.

Further, the application 111 may calculate a matching score for the first point group based on the number of detected matching points.

Subsequently, in the embodiment, the application 111 may calculate matching scores for second to N-th point groups in the tracking point set TS in the same manner as above.

In an embodiment, the application 111 may determine a point group having the highest matching score among the calculated matching scores for point groups as the tracking point main group TMG.

In this way, the application 111 may detect a point group having the highest matching rate for the edge in the second frame-down image DI-2 from among the plurality of point groups according to various translation parameters.

Therefore, the application 111 can detect and/or track the target object in the aforementioned frame images based on a plurality of points included in the point group having the highest matching rate (i.e., a point group having high target object detection and/or tracking performance).

Accordingly, the application 111 can improve the accuracy and reliability of target object detection and/or tracking results.

In the embodiment, the application 111 may perform target object tracking based on the determined tracking point main group TMG (S113).

That is, in the embodiment, the application 111 may implement the target object tracking service capable of detecting and/or tracking the predetermined target object based on the tracking point main group TMG.

Specifically, in the embodiment, the application 111 may perform target object tracking according to the above-described first frame-down image DI-1 and second frame-down image DI-2 based on a translation parameter corresponding to the determined tracking point main group TMG.

More specifically, in the embodiment, the application 111 may perform a dense image alignment operation on the first frame-down image DI-1 and the second frame-down image DI-2 (hereinafter referred to as successive frame images) using the translation parameter corresponding to the determined tracking point main group TMG(hereinafter referred to as a main translation parameter).

In the embodiment, the application 111 may estimate a homography of the successive frame images through the dense image alignment operation.

For reference, the homography may mean a certain transformation relationship established between projected corresponding points when one plane is projected onto another plane.

In addition, in the embodiment, the application 111 may perform target object tracking for the second frame-down image DI-2 based on the first frame-down image DI-1 on the basis of the estimated homography.

That is, in the embodiment, the application 111 may perform a dense image alignment operation on the successive frame images, which are downscaled frame images, assume a homography with respect to the successive frame images according thereto, and use the assumed homography for target tracking based on the successive frame images.

Accordingly, the application 111 can minimize a decrease in the accuracy of target object motion estimation due to various noises (e.g., motion blur, glare, and/or a rolling shutter effect) that can be caused by image shifting of successive frame images or scale changes and/or viewpoint changes with respect to the corresponding target object.

In addition, the application 111 can remarkably improve the performance of an estimation algorithm for a motion of a target object in successive frame images.

Further, in an embodiment, the application 111 may provide an augmented reality object based on the tracking performed as above.

Here, the augmented reality object according to the embodiment may mean a virtual object provided through an augmented reality (AR) environment.

Specifically, in an embodiment, the application 111 may provide a predetermined augmented reality object (hereinafter referred to as a first augmented reality object) that is anchored to a target object to be tracked.

For reference, anchoring may refer to a functional operation of matching the target object and the first augmented reality object such that a change in 6 degrees of freedom (6 DoF) of the first augmented reality object is implemented in response to a change in 6 DoF of the target object.

That is, the application 111 may determine the 6 degrees of freedom of the first augmented reality object according to change in the 6 degrees of freedom of the target object to be tracked according to the relative anchoring relationship set between the target object and the first augmented reality object.

The application 111 may display and provide the first augmented reality object in a predetermined area based on the target object according to a posture (position and/or orientation) based on the determined 6 degrees of freedom.

In this manner, the application 111 can implement an augmented reality service based on a high performance target motion estimation algorithm.

As described above, the method and system for estimating a motion of a real-time image target between successive frames according to an embodiment of the present invention can detect and/or track an image target accurately and easily while canceling noise (e.g., motion blur, glare and/or a rolling shutter effect) due to motion of the image target within successive frame images (i.e., image shifting) or change in the scale and/or viewpoint with respect to the image target if the noise or change is present by utilizing a characteristic that a downscaled image is insensitive to position movement with respect to a desired characteristic or pattern within the image and a characteristic that the presence or absence of a desired characteristic or pattern can be easily detected by tracking a motion of the image target using downscaled successive frame images.

In addition, the method and system for estimating a motion of a real-time image target between successive frames according to an embodiment of the present invention can estimate a motion of the image target by assuming a homography between corresponding successive frame images based on downscaled successive frame images to reduce the amount of data processing necessary for homography calculation to increase a calculation speed and/or efficiency, thereby improving the performance of an estimation algorithm for a motion of the image target.

In addition, the method and system for estimating a motion of a real-time image target between successive frames according to an embodiment of the present invention can support various object detection and/or tracking services based on the estimation algorithm as described above and thus can enhance the quality and effectiveness of the various object detection and/or tracking services (e.g., augmented reality based simultaneous localization and mapping (SLAM) service, and the like).

The embodiments according to the present invention described above may be implemented in the form of program instructions that can be executed through various computer components and recorded in a computer-readable recording medium. The computer-readable recording medium may include program instructions, data files, data structures, and the like alone or in combination. The program instructions recorded in the computer-readable recording medium may be specially designed and configured for the present invention, or may be known and used by those skilled in the art of computer software. Examples of the computer-readable recording medium include a hard disk, magnetic media such as a floppy disc and a magnetic tape, optical recording media such as a CD-ROM and a DVD, magneto-optical media such as a floptical disk, and hardware devices specially configured to store and execute program instructions, such as a ROM, a RAM, and flash memory. Examples of program instructions include not only machine language code such as those generated by a compiler, but also high-level language code that can be executed by a computer using an interpreter or the like. A hardware device may be converted into one or more software modules to perform processing according to the present invention, and vice versa.

The specific implementations described in the present invention are only examples and do not limit the scope of the present invention. For brevity of the specification, descriptions of conventional electronic components, control systems, software, and other functional aspects of the systems may be omitted. In addition, connections of lines or connecting members between components shown in the drawings exemplify functional connections and/or physical or circuit connections, and in an actual device, may be represented as various functional connections, physical connections, or circuit connections that are replaceable or additional. Furthermore, unless there is a specific reference such as "essential" or "important", they may not be necessary components for the application of the present invention.

Although the present invention has been described in detail with reference to preferred embodiments of the present invention, those skilled in the art or those having ordinary knowledge in the art will appreciate that various modifications and variations of the present invention can be made without departing from the spirit and technical scope of the present invention described in the claims. Accordingly, the technical scope of the present invention should not be limited to the detailed description of the specification, but should be defined by the claims.

## Claims

1. A method of estimating a motion of a real-time image target between successive frames by a motion estimation application executed by at least one processor of a terminal, the method comprising:
detecting a target object in a first frame image;
generating a first frame-down image by downscaling the first frame image;
setting a plurality of tracking points for the target object in the first frame-down image;
obtaining a second frame image consecutive to the first frame image;
generating a second frame-down image by downscaling the second frame image; and
tracking the target object in the second frame-down image based on the plurality of tracking points.

2. The method according to claim 1, wherein the tracking the target object in the second frame-down image based on the plurality of tracking points comprises:
generating a tracking point set based on the plurality of tracking points;
determining, as a tracking point main group, a point group having a highest matching score for the second frame-down image among a plurality of point groups included in the tracking point set; and
tracking the target object in successive frame images including the first frame image and the second frame image based on the tracking point main group.

3. The method according to claims 1 or 2, wherein the setting the plurality of tracking points comprises:
detecting edges of the target object in the first frame-down image; and
setting the plurality of tracking points based on points positioned on the detected edges.

4. The method according to any one of the preceding claims, wherein the setting the plurality of tracking points based on points positioned on the edges comprises setting the plurality of tracking points at preset intervals based on a preset position on the edges.

5. The method according to any one of the preceding claims, wherein the generating a tracking point set based on the plurality of tracking points comprises:
converting a tracking point group including the plurality of tracking points based on preset translation parameters;
generating a tracking conversion point group corresponding to each of the preset translation parameters through the conversion; and
generating the tracking point set including the generated at least one tracking conversion point group and the tracking point group.

6. The method according to any one of the preceding claims, wherein the tracking point main group is a point group having a highest matching score for the second frame-down image among a plurality of point groups in the tracking point set.

7. The method according to any one of the preceding claims, wherein the matching score is a parameter value indicating a matching rate between any one of the plurality of point groups included in the tracking point set and a target edge corresponding to an edge in the second frame-down image.

8. The method according to any one of the preceding claims, wherein the determining as the tracking point main group comprises:
detecting the target edge in the second frame-down image;
projecting each of the plurality of point groups included in the tracking point set onto a target edge area including the detected target edge;
detecting matching points positioned on the target edge among a plurality of points included in each of the projected point groups; and
calculating the matching score for each point group based on the detected matching points.

9. The method according to any one of the preceding claims, wherein the determining as the tracking point main group comprises determining a point group having a highest matching score among a plurality of matching scores calculated for the point groups as the tracking point main group.

10. The method according to any one of the preceding claims, wherein the tracking the target object in the successive frame images comprises:
performing a dense image alignment operation on the successive frame images based on a translation parameter corresponding to the tracking point main group;
estimating a homography for the successive frame images based on the performed operation; and
tracking the target object based on the estimated homography.
